# EUROPÄISCHE PATENTSCHRIFT

(11) **EP 1 557 646 B1**
(45) Veröffentlichungstag und Bekanntmachung des Hinweises auf die Patenterteilung: **08.02.2012**
(21) Anmeldenummer: 04030902.3
(22) Anmeldetag: 28.12.2004
(51) Int. Cl.: G01D 5/347, G01D 5/244, G01D 5/249

(54) **Drehwinkelgeber sowie Verfahren zum Abtasten der Codescheibe eines Drehwinkelgebers**
Rotary encoder and method for scanning the code disk of a rotary encoder
Détecteur d'angle de rotation et procédé de balayage optique d'une disque de code d'un détecteur d'angle de rotation

(30) Priorität: 14.01.2004 DE 102004001996; 23.07.2004 DE 202004011508 U
(43) Veröffentlichungstag der Anmeldung: 27.07.2005
(73) Patentinhaber: TRW Automotive Electronics & Components GmbH, 78315 Radolfzell (DE)
(72) Erfinder: Backes, Ulrich, 78315 Radolfzell (DE)
(74) Vertreter: Prinz & Partner

(56) Entgegenhaltungen:
- EP-A- 0 478 394
- EP-A- 0 635 700
- WO-A-92/04776
- DE-A1- 2 729 697
- DE-A1- 4 014 479
- DE-A1- 10 006 675
- DE-A1- 19 604 502
- US-A- 4 335 306
- ERNST, ALFONS: "Digitale Längen- und Winkelmesstechnik" 2001, VERLAG MODERNE INDUSTRIE , LANDSBERG/LECH , XP002325947 * Seiten 30-39; Abbildung 15b *

## Beschreibung

Die Erfindung betrifft ein Verfahren zum Abtasten einer Codescheibe eines Drehwinkelgebers gemäß dem Oberbegriff des Anspruchs 1.

Aus dem Stand der Technik sind verschiedene absolut arbeitende optische Winkelgeber bekannt, die auf dem durchleuchtenden oder reflektierenden Abtasten einer Codescheibe mit digitalen Spuren basieren (siehe beispielsweise die DE 198 55 064 und die DE 199 44 005). Solche Drehgeber benötigen für N darzustellende Winkelpositionen log2(N) Codespuren. Bei begrenztem Bauraum nimmt die Blendenbreite je Lichtsensor daher um 1/log2(N) ab. Gleichzeitig nimmt die Blendenhöhe mit 1/N ab. Die Blendenfläche (und damit die je Lichtsensor verfügbare Lichtmenge) nimmt also mit 1/(N*log2(N)) ab, was die technisch erreichbare Genauigkeit stark begrenzt.

Zur Absicherung solcher Drehgeber gegen eventuell auftretende Defekte wie beispielsweise eine beschädigte Codescheibe werden weitere Maßnahmen notwendig. Ein Ansatz besteht darin, die benötigten Spuren zur Absicherung doppelt auszuführen. Diese Maßnahmen verschärfen aber das Lichtmengenproblem zusätzlich. Die rein digitalen Sensoren haben außerdem den Nachteil, daß die Aufbringung der Codes für alle Spuren gleichermaßen genau ausgeführt werden muß.

Es sind auch absolute Winkelgeber bekannt, die auf einem rein analogen Abtasten einer Codescheibe basieren (siehe beispielsweise die DE 101 43 662). Diese Winkelgeber haben aber den Nachteil, daß die Analogspur über einen relativ großen Weg sehr genau hergestellt werden muß. Der Aussteuerbereich solcher Geber ist beschränkt, und die benötigte Genauigkeit der nachgeschalteten Analog-Digitalwandler ist relativ hoch. Der Lösungsansatz, den Geber anhand hinreichend vieler Punkte entlang einer relativ ungenau hergestellten Spur einmalig zu kalibrieren, und dann im laufenden Betrieb entlang der gefundenen Kalibrierwerte zu interpolieren, scheitert in der Praxis an der Alterung der beteiligten Bauteile.

Aus der DE 196 04 502 ist ein Drehgeber bekannt, bei dem eine Reihe von Graycodespuren Verwendung findet und der eine verfeinerte Winkelgenauigkeit mit Hilfe einer sägezahnförmigen Analogspur erreicht. Diese Anordnung hat den Nachteil, daß sie an den Sprungstellen des Sägezahns dieselbe Helligkeit produziert wie in der Mitte eines Zahns. Damit ist eine Mehrdeutigkeit des auszulesenden Winkels gegeben. Ferner ist sie nicht sicher gegen Beschädigungen der Codespuren geschützt.

Aus der DE 40 14 479 ist ein Verfahren mit den Merkmalen des Oberbegriffs des Anspruchs 1 bekannt, bei dem der Winkelgeber eine Reihe von Binärcodespuren verwendet und eine verfeinerte Winkelgenauigkeit mit Hilfe einer Analogspur erreicht wird. Diese Anordnung hat den wesentlichen Nachteil, daß sie nicht sicher gegen Beschädigungen der Codespuren geschützt ist. Weiterhin ist die verwendete, im Kern sinusförmig begrenzte Analogspur für die Verbesserung der Winkelgenauigkeit nicht optimal geformt, da insbesondere in der unmittelbaren Umgebung des Maximums bzw. Minimums der Lichtintensität der Gradient fast Null ist.

Aus der DE 100 06 675 ist eine Weg- bzw. Winkelmeßeinrichtung bekannt, die mehrere Gray-codierte Digitalspuren und eine damit synchron kontinuierlich in der Breite ansteigende bzw. abfallende Analogspur aufweist. Die Abtastung erfolgt mit Hilfe einer regelmäßigen Anordnung einer Vielzahl von Lichtsensoren, deren Abstand zueinander deutlich kleiner als die analoge Spurweite ist. Diese Anordnung hat den Nachteil, daß die erzielbare Auflösungsverbesserung durch die Anzahl der auf die Analogspurbreite entfallenden Lichtsensoren beschränkt ist. Bei einer relativ hohen geforderten Verbesserung der Genauigkeit wird diese Technik erst bei einem deutlichen Preisverfall des benötigten Lichtsensorarrays attraktiv. Alternativ müßte die Breite der Analogspur erhöht werden, was zu Ausleuchtungsproblemen führen kann und außerdem zu Lasten des Bauraums geht. Ein weiterer Nachteil der beschriebenen Anordnung ist, daß sie bei maximaler Ausnützung des für die Auflösungsverbesserung zur Verfügung stehenden Winkelintervalls (zwischen zwei Digitalcodesprüngen) zur Vermeidung von Mehrdeutigkeiten der Abtastwerte eine zweite, gleichartige und phasenversetzte Spur benötigt.

Der Erfindung liegt die Aufgabe zu Grunde, ein Verfahren zur Abtastung einer Codescheibe eines Drehgebers zu schaffen, der bzw. das unter Verwendung möglichst weniger Codespuren eine möglichst hohe Genauigkeit erreichen kann und bei dem die Anforderungen an die Herstellgenauigkeit so weit wie möglich reduziert sind.

Diese Aufgabe wird gelöst durch ein Verfahren zum Abtasten eine Codescheibe eines Drehwinkelgebers, mit einer digitalen Codierung, mittels der ein aktuelles Winkelintervall aus einer Vielzahl von möglichen Winkelintervallen bestimmt werden kann, und einer analogen Codierung, mittels der die genaue Winkelposition der Codescheibe innerhalb des aktuellen Winkelintervalls bestimmt werden kann, wobei die analoge Codierung aufeinanderfolgend Maxima und Minima aufweist, wobei die analoge Codierung abgetastet wird und ein gefundener maximaler bzw. minimaler Abtastwert als Analogreferenz für das jeweilige zugeordnete Winkelintervall in einem nachgeschalteten Verarbeitungssystem abgespeichert wird und der genaue Winkel zwischen einem Maximum und einem benachbarten Minimum im Winkelintervall danach durch Interpolation ermittelt wird.

Die Erfindung wird nachfolgend anhand mehrerer Ausführungsformen beschrieben, die in den beigefügten Zeichnungen dargestellt sind. In diesen zeigen:
- Figur 1 einen Querschnitt durch einen Drehwinkelgeber;
- Figur 2 eine schematische Draufsicht auf eine Codescheibe und zugeordnete Lichtsensoren gemäß einer ersten Ausführungsform, die beim Drehwinkelgeber von Figur 1 verwendet werden können;
- Figur 3 schematisch den Ablauf einer Winkelbestimmung;
- Figur 4 eine schematische Draufsicht auf eine Codescheibe und zugeordnete Lichtsensoren gemäß einer zweiten Ausführungsform, die der Erläuterung der Figur 5 dient; und
- Figur 5 eine schematische Draufsicht auf eine Codescheibe und zugeordnete Lichtsensoren gemäß einer dritten Ausführungsform.

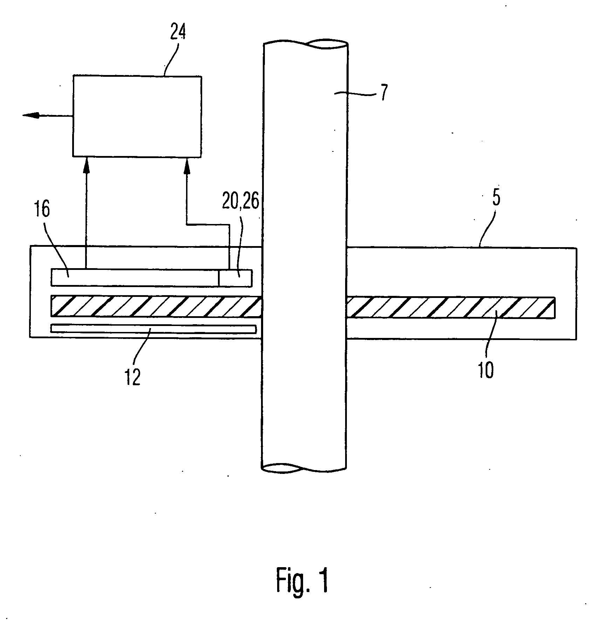

In Figur 1 ist ein Drehwinkelgeber 5 gezeigt, der Teil eines Lenkwinkelsensors ist. Der Lenkwinkelsensor dient dazu, die Winkelposition einer schematisch angedeuteten Lenkwelle 7 zu bestimmen.

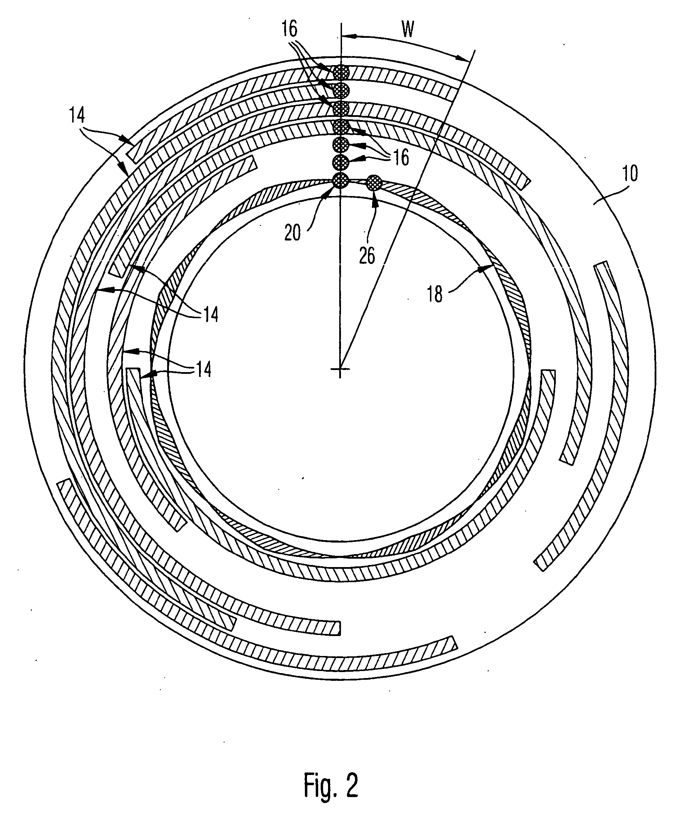

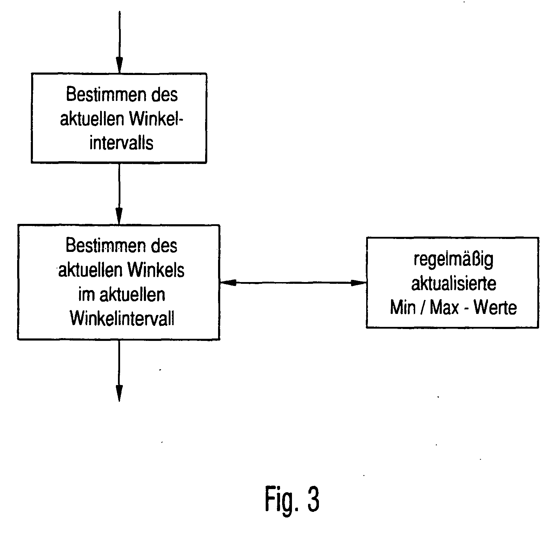

Der Drehwinkelgeber weist eine Codescheibe 10 auf (siehe auch Figur 2), die drehfest mit der Lenkwelle 7 verbunden ist. Die Codescheibe 10 besteht aus Kunststoff und ist bei dem gezeigten Ausführungsbeispiel transparent ausgeführt. Auf der Codescheibe sind unterschiedliche Codespuren angeordnet, die zwei Arten der Winkelbestimmung ermöglichen, nämlich zum einen eine Unterscheidung von verschiedenen Winkelintervallen W und zum anderen eine Winkelbestimmung innerhalb eines dieser Winkelintervalle (siehe auch Figur 3). Die Codespuren werden von einer schematisch gezeigten Lichtquelle 12 beleuchtet.

Zur Unterscheidung zwischen verschiedenen Winkelintervallen W sind mehrere Reihen von digitalen Codespuren 14 vorgesehen. "Digital" bedeutet hier, daß jede Codespur 14 einem ihr zugeordneten Lichtsensor 16 eine digitale Information liefert, beispielsweise Lichtdurchgang oder Lichtabsorption oder auch Lichtreflexion oder Lichtabsorption. Die Codierung der Codespuren 14 kann also aus einem lichtabsorbierenden Material bestehen oder auch aus einem reflektierenden Material. Bei dem gezeigten Ausführungsbeispiel ist die Codescheibe 10 in 16 Winkelintervalle W unterteilt und weist sechs digitale Codespuren 14 auf. Es ist offensichtlich, daß auch eine höhere Anzahl von Winkelintervallen W verwendet werden könnte.

Aus Gründen der Fehlersicherheit wird eine spezielle Anordnung der digitalen Codespuren 14 verwendet, bei dem je fortschreitender Winkelposition jeweils genau eine Spur ihren Zustand wechselt. Daher führt ein Einfachfehler (d. h. eine Beschädigung einer Codespur in einer beliebigen Winkelposition) höchstens zur Ausgabe eines Winkelfehlers in der Größe eines Winkelintervalls. Andere Defekte als ein Einfachfehler werden direkt als auf der Scheibe nicht vorkommender Code erkannt. Dies erlaubt, auf eine Verdopplung der Codespuren zur Absicherung gegen Defekte zu verzichten.

Zur Feststellung der genauen Winkelposition innerhalb eines Winkelintervalls W ist zusätzlich zu den digitalen Codespuren 14 eine analoge Codespur 18 vorgesehen. "Analog" bedeutet hier, daß die von dieser Codespur auslesbare Information eine Vielzahl von diskreten Werten einnehmen kann. Die analoge Codespur 18 ändert sich innerhalb eines Winkelintervalls W kontinuierlich. Bei dem hier gezeigten Ausführungsbeispiel wird eine Codespur 18 verwendet, deren Breite in einem Winkelintervall W kontinuierlich linear zunimmt und ab dem Wechsel zum nächsten Winkelintervall W wieder kontinuierlich linear abnimmt. Die analoge Codespur 18 wird von einem Lichtsensor 20 abgetastet. Je nach Ausführungsform ist die analoge Codespur 18 lichtundurchlässig oder lichtdurchlässig ausgeführt.

Jeder gefundene maximale (bzw. minimale) Abtastwert der analogen Codespur 18 wird als Analogreferenz für das jeweilige zugeordnete Winkelintervall W in einem nachgeschalteten Verarbeitungssystem 24 abgespeichert. Der genaue Winkel zwischen einem Maximum und einem benachbarten Minimum im Winkelintervall W wird danach durch Interpolation ermittelt.

Die maximalen bzw. minimalen Abtastwerte der analogen Codespur 18 können im Betrieb des Drehwinkelgebers regelmäßig aktualisiert werden. Mit diesem ständig rekalibrierenden Verfahren wird erreicht, daß die Alterung der beteiligten Bauteile nur eine untergeordnete Rolle spielt. Außerdem werden die Anforderungen an die Linearität der Analogspur auf den relativ kleinen Bereich innerhalb eines Winkelintervalls W beschränkt. Die Anforderungen an die Genauigkeit des nachgeschalteten Analog/Digitalwandlers beschränken sich ebenfalls auf die Unterteilung des Winkelintervalls W in die gewünschte Winkelgenauigkeit.

Die Analogspur 18 wird zur Absicherung gegen Analogspurdefekte mit einem weiteren, gegen den ersten Sensor 20 um einen Winkel versetzten Sensor 26 abgetastet. Dieser Winkel beträgt vorzugsweise die Hälfte des Winkelintervalls W plus ein ganzzahliges Vielfaches dieses Winkelintervalls. Da für jeden Winkel im Winkelintervall W nur bestimmte Abtastwertpaare der Sensoren 20, 26 zulässig sind, werden Beschädigungen der Analogspur damit zuverlässig erkennbar. Außerdem kann damit auch ohne Digitalspurinformation das aktuelle Winkelintervall vom benachbarten Winkelintervall unterschieden werden. Damit werden auch noch jene Beschädigungen der Digitalspur erkennbar, die einen Winkelfehler in der Größe eines Winkelintervalls erzeugen.

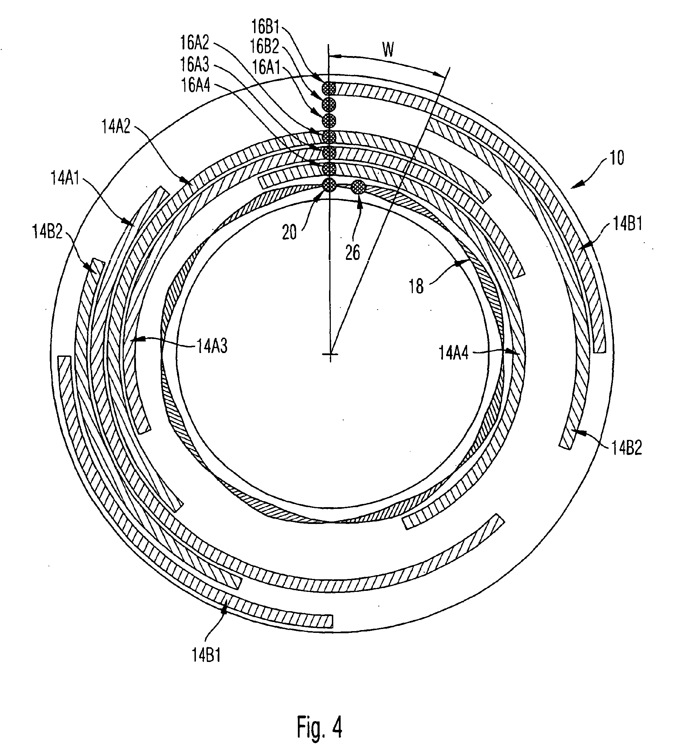

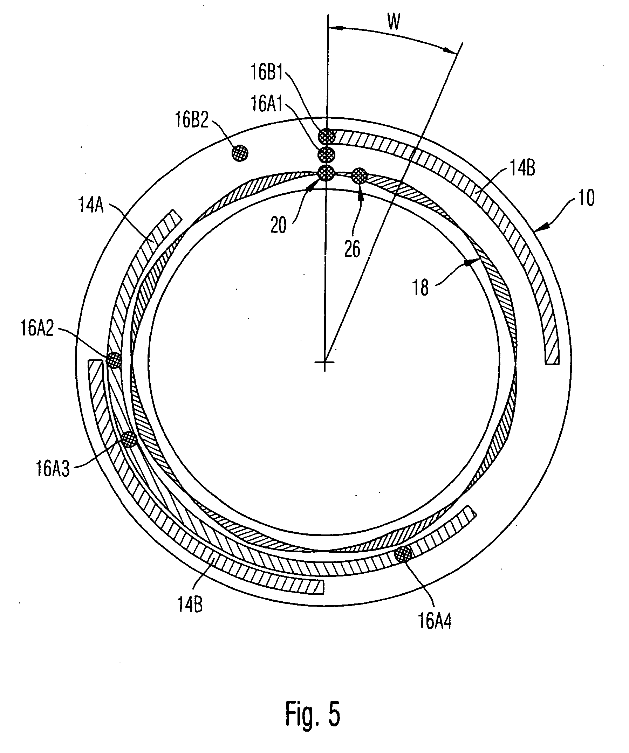

Figur 4 zeigt eine Codescheibe 10 und ihr zugeordnete Lichtsensoren 16A1 bis 16A4 sowie 16B1 und 16B2 für einen Drehwinkelgeber gemäß einer zweiten Ausführungsform, wobei diese lediglich der Erläuterung der in Figur 5 gezeigten Codescheibe und der ihr zugeordneten Sensoren dient. Die Codescheibe 10 gemäß Figur 4 ist wiederum in 16 Winkelintervalle W unterteilt und weist ebenso wie die Codescheibe 10 aus Figur 2 sechs digitale Codespuren 14A1 bis 14A4 sowie 14B1 und 14B2 auf, die in einer alternativen Anordnung vorliegen, wobei wiederum je fortschreitendem Winkelintervall W jeweils genau eine Spur ihren Zustand wechselt. Ansonsten ist die Codescheibe 10 mit der in der Figur 2 gezeigten Codescheibe identisch und kann identisch verwendet werden, um die genaue Winkelposition einer Lenkwelle zu bestimmen. Wie aus Figur 4 ersichtlich, ist die Anordnung der digitalen Codespuren 14A1 bis 14A4 sowie die Anordnung der Spuren 14B1 und 14B2 gerade so gewählt, daß jeweils die mit demselben Buchstaben bezeichneten Codespuren, wenn sie je um ein ganzzahliges Vielfaches des Winkelintervalls W verschoben werden, sich gegenseitig überlappen. So weist beispielsweise die mit 14B2 bezeichnete, aus zwei Abschnitten bestehende Codespur die gleiche Lage wie die mit 14B1 bezeichnete, ebenfalls aus zwei Abschnitten bestehende Codespur auf, nachdem die gesamte Codespur 14B2 um ein Winkelintervall entgegen dem Uhrzeigersinn gedreht wurde. Wird nun also lediglich die Codespur 14B2 in der beschriebenen Weise verdreht, wobei auch der ihr zugeordnete Sensor 16B2 entsprechend mitverdreht werden muß, lassen sich die beiden nun unmittelbar übereinander liegenden Spuren 14B1 und 14B2 physikalisch zu einer einzigen Spur 14B (wiederum bestehend aus zwei Abschnitten) zusammenfassen (Figur 5). Dieser sind nun zwei um ein Winkelintervall W zueinander verschobene Sensoren 16B1 und 16B2 zugeordnet, wodurch der durch die Codescheibe 10 benötigte Bauraum ohne jeglichen Informationsverlust verringert werden kann.

Eine weitere Verringerung des Bauraumes ist möglich, indem die mit 14A1 bis 14A4 bezeichneten Codespuren ebenso relativ zueinander verschoben und nach diesen Phasenverschiebungen zu einer einzigen Codespur 14A zusammengefaßt werden, wobei auch hier gleichzeitig eine entsprechende Verschiebung der den Codespuren zugeordneten Sensoren 16A1 bis 16A4 vorgenommen wird. Die auf diese Weise gebildete Codescheibe 10 mit verringerter Codespuranzahl inklusive der zugeordneten Sensoren 16A1 bis 16A4 sowie 16B1 und 16B2 ist in Figur 5 dargestellt. Diese bietet den Vorteil eines stark verringerten Bauraums unter Beibehaltung der Fehlersicherheit der in Figur 2 dargestellten Codescheibe sowie eine deutliche Verringerung des Herstellungsaufwandes.

## Patentansprüche

1. Verfahren zum Abtasten eine Codescheibe (10) eines Drehwinkelgebers, mit einer digitalen Codierung (14), mittels der ein aktuelles Winkelintervall aus einer Vielzahl von möglichen Winkelintervallen (W) bestimmt werden kann, und einer analogen Codierung (18), mittels der die genaue Winkelposition der Codescheibe (10) innerhalb des aktuellen Winkelintervalls (W) bestimmt werden kann, wobei die analoge Codierung (18) aufeinanderfolgend Maxima und Minima aufweist, wobei die analoge Codierung (18) abgetastet wird, **dadurch gekennzeichnet, dass** ein gefundener maximaler bzw. minimaler Abtastwert als Analogreferenz für das jeweilige zugeordnete Winkelintervall (W) in einem nachgeschalteten Verarbeitungssystem (24) abgespeichert wird und der genaue Winkel zwischen einem Maximum und einem benachbarten Minimum im Winkelintervall (W) danach durch Interpolation ermittelt wird.

2. Verfahren nach Anspruch 1, **dadurch gekennzeichnet, dass** die maximalen bzw. minimalen Abtastwerte der analogen Codierung (18) während des Betriebs des Drehwinkelgebers aktualisiert werden.

3. Verfahren nach einem der vorhergehenden Ansprüche, **dadurch gekennzeichnet, dass** die von der digitalen Codierung erhaltene Information über das aktuelle Winkelintervall (W) auf Plausibilität überprüft wird.

4. Verfahren nach Anspruch 3, **dadurch gekennzeichnet, dass** bei Vorliegen eines Fehlers der digitalen Codierung (14) in der Größenordnung eines Winkelintervalls (W) durch Auslesen der analogen Codierung (18) bestimmt wird, in welchem Winkelintervall (W) sich die Codescheibe (10) befindet.

## Claims

1. A method of scanning a code disc (10) of a rotation angle encoder, with a digital coding (14) by means of which a current angle interval can be determined from a multitude of possible angle intervals (W), and an analog coding (18) by means of which the precise angle position of the code disc (10) can be determined within the current angle interval (W), the analog coding (18) having maxima and minima in succession, the analog coding (18) being scanned, **characterized in that** a maximum or minimum scanning value that is found is stored as an analog reference for the respective associated angle interval (W) in a processing system (24) connected downstream and the precise angle between a maximum and an adjacent minimum in the angle interval (W) is then determined by interpolation.

2. The method according to claim 1, **characterized in that** the maximum or minimum scanning values of the analog coding (18) are updated during operation of the rotation angle encoder.

3. The method according to either of the preceding claims, **characterized in that** the information obtained from the digital coding is checked for plausibility using the current angle interval (W).

4. The method according to Claim 3, **characterized in that** when there is an error of the digital coding (14) on the order of an angle interval (W), the angle interval (W) in which the code disc (10) is located is determined by reading out the analog coding (18).

## Revendications

1. Procédé de balayage d'un disque de code (10) d'un encodeur d'angle de rotation, avec un codage numérique (14) au moyen duquel un intervalle angulaire actuel peut être déterminé à partir d'une multitude d'intervalles angulaires (W) possibles, et avec un codage analogique (18) au moyen duquel la position angulaire exacte du disque de code (10) peut être déterminée à l'intérieur de l'intervalle angulaire (W) actuel, le codage analogique (18) présentant successivement des maxima et des minima, le codage (18) analogique étant balayé, **caractérisé en ce qu'**une valeur de balayage maximale ou minimale trouvée est mémorisée dans un système de traitement (24) branché en aval, en tant que référence analogique pour l'intervalle angulaire (W) respectivement associé, et l'angle exact entre un maximum et un minimum voisin dans l'intervalle angulaire (W) est ensuite déterminé par interpolation.

2. Procédé selon la revendication 1, **caractérisé en ce que** les valeurs de balayage maximales ou minimales du codage analogique (18) sont actualisées pendant le fonctionnement du encodeur d'angle de rotation.

3. Procédé selon les revendications précédentes, **caractérisé en ce que** l'information reçue par le codage numérique est vérifiée quant à sa plausibilité par l'intermédiaire de l'intervalle angulaire (W) actuel.

4. Procédé selon la revendication 3, **caractérisé en ce qu'**en présence d'une erreur du codage numérique (14) dans l'ordre de grandeur d'un intervalle angulaire (W), il est déterminé, par la lecture du codage (18) analogique, dans quel intervalle angulaire (W) se trouve le disque de code (10).
